# EUROPÄISCHE PATENTSCHRIFT

(11) **EP 2 794 970 B1**
(45) Veröffentlichungstag und Bekanntmachung des Hinweises auf die Patenterteilung: **23.05.2018**
(21) Anmeldenummer: 12806454.0
(22) Anmeldetag: 19.12.2012
(51) Int. Cl.: F28F 21/02, B29C 70/88, F28F 1/12

(54) **WÄRMELEITENDER FORMKÖRPER UND VERFAHREN ZU SEINER HERSTELLUNG**
THERMALLY CONDUCTIVE MOLDED BODY AND METHOD FOR THE PRODUCTION THEREOF
CORPS MOULÉ THERMOCONDUCTEUR ET PROCÉDÉ DE FABRICATION DUDIT CORPS MOULÉ

(30) Priorität: 21.12.2011 EP 11194835
(43) Veröffentlichungstag der Anmeldung: 29.10.2014
(73) Patentinhaber: Zehnder Group International AG, 5722 Gränichen (CH)
(72) Erfinder: KRIESI, Ruedi, CH-8820 Wädenswil (CH)
(74) Vertreter: Rausch Wanischeck-Bergmann Brinkmann
(86) Internationale Anmeldenummer: PCT/EP2012/076134
(87) Internationale Veröffentlichungsnummer: WO 2013/092700

(56) Entgegenhaltungen:
- JP-A- 5 230 751
- JP-A- S6 414 139
- US-A- 4 915 925
- US-A- 4 946 738

## Beschreibung

Die vorliegende Erfindung betrifft einen wärmeleitenden Formkörper und das Verfahren zur Herstellung eines wärmeleitenden Formkörpers.

Wärmeleitende Formkörper werden beispielsweise in der Heizungstechnik zum Zwecke einer besseren flächigen Wärmeverteilung eingesetzt. Beispielsweise werden im Radiatorbereich Metallplatten verwendet. Diese, wie alle wärmeleitenden Materialien, haben in der Regel den Nachteil, dass die Wärme nicht gleichmäßig verteilt wird. An den Stellen, an denen Wärme eingeleitet wird, sind diese Formkörper in der Regel am heißesten und weisen eine von da an stetig abnehmende Temperatur auf.

Aus der DE 103 41 255 ist Blähgraphit bekannt, welcher über eine gute Wärmeverteilfähigkeit im Zusammenhang mit einer guten Wärmeleitfähigkeit verfügt Es wurde daher vorgeschlagen, Heizmedium führende Rohre in dieses Material einzulegen, um auch bei größeren Rohrabständen eine gleichmäßige Oberflächentemperatur und einen entsprechenden guten Wärmeaustausch mit der Umgebung zu erzielen. Bei hoher Temperatur bilden sich aus dem Ausgangsprodukt lange Fasern, die maßgeblich für die Wärmeleitfähigkeit sind. Dieses Material hat den Nachteil, dass die Herstellung formstabiler Körper schwierig ist, da diese keine gute Festigkeit aufweisen. Die Platten bzw. Körper sind schwer zu handhaben, da sie leicht brechen und weisen praktisch keine ausreichende Schub- und Zugfestigkeit auf.

In EP 0 445 400 A1 bzw. EP 0 515 891 A1 wurde vorgeschlagen, Blähgraphit chemisch zu binden. Abgesehen von sehr aufwendigen Verfahrensführungen werden ebenfalls aufwendige und schwierig zu handhabende Bindemittel wie Phosphorsäure, Aluminiumhydroxid bzw. Ethanolamin vorgeschlagen.

Auch wurde vorgeschlagen, Platten aus Blähgraphit mit Kunststoffen zu beschichten, die geeignet sind, mechanische Kräfte aufzunehmen. Auch hierfür ist eine gute Festigkeit des Formkörpers notwendig. Dokument JP5230751 zeigt ein Verfahren, in dem Bikomponentfasern mit anderen Fasern in schüttfähigem Zustand gemischt werden. Diese Mischung wird in eine Form eingebracht und zugleich gepresst und erwärmt (Heisspressen). Bei diesem Heisspressschritt schmilzt das Polymer der Außenseite der Bikomponentfasern und der Formkörper wird intern vernetzt. Der Formkörper wird danach auf einer Oberfläche beschichtet und nochmals durch Heisspressen vernetzt.

Dokument US4946738 zeigt auch ein Verfahren, in dem 1-15 Gew.-% Bikomponentfasern mit anderen Fasern in schüttfähigem Zustand gemischt werden. Diese Mischung wird in eine Form eingebracht und gepresst. Danach wird der Formkörper durch Schmelzen des Polymers der Außenseite der Bikomponentfaser bei 126-150°C intern vernetzt. Der Formkörper kann auch beschichtet sein.

Die Dokumente JPS6414139 und US4915925 zeigen, dass es bekannt ist, dass die Zufügung von Blähgraphitfasern die Wärmeleitfähigkeit von formgepressten Kompositmaterialien erhöht.

Ausgehend vom vorbeschriebenen Stand der Technik liegt der vorliegenden Erfindung die **Aufgabe** zugrunde, ein Verfahren zur Herstellung wärmeleitender Formkörper der gattungsgemäßen Art bereitzustellen, welches es ermöglicht, Formkörper mit guter Schub-, Zug- und Druckfestigkeit herzustellen. Darüber hinaus sollen die Formkörper flexibler hinsichtlich der weiteren Ausgestaltung herstellbar sein.

Zur technischen **Lösung** dieser Aufgabe wird mit der Erfindung vorgeschlagen ein Verfahren mit den Merkmalen des Anspruches 1. Weitere Vorteile und Merkmale ergeben sich aus den Unteransprüchen. Darüber hinaus wird mit der Erfindung ein Formkörper, hergestellt nach dem erfindungsgemäßen Verfahren, vorgeschlagen.

Gemäß der Erfindung wird vorgeschlagen, das für die Wärmeleitung vorgesehene Material in schüttfähigem Zustand, d.h. als Granulat, Faser oder dgl. zu vermischen mit wenigstens einem Mehrkomponentenmaterial. Bei dem Mehrkomponentenmaterial handelt es sich um solche Materialien, die aus wenigstens zwei Komponenten bestehen, die unterschiedliche Schmelztemperaturen aufweisen. Das Mehrkomponentenmaterial liegt in schüttfähiger Form, also als Faser, Granulat oder dgl. vor. Auch kann das Mehrkomponentenmaterial als Ballen vorliegen und wird mit Hilfe von Fasernöffnern ausgebreitet, bevor es mit dem Granulat gemischt wird.

Das lose Gemenge wird dann in eine Form eingebracht, auf die gewünschte Dichte verpresst und durch Wärmeeinleitung wird das Mehrkomponentenmaterial vernetzt. Der sich ergebende Formkörper weist somit die Wärmeleiteigenschaften des wärmeleitenden Materials auf und darüber hinaus die mechanischen Festigkeiten, die sich aus dem Mehrkomponentenmaterial ergeben.

Bikomponentenfasern sind beispielsweise in der Textilindustrie zur Herstellung von Vliesstoffen im Einsatz. Derartige Fasern bestehen aus einem höher schmelzenden Kern und einem niedriger schmelzenden Material aus unterschiedlichen Polymeren. Im Sinne der vorliegenden Anmeldung wird der Begriff "Schmelzen" bzw. "Schmelztemperatur" oberbegrifflich verstanden, d.h., es kann sich dabei auch um die Vernetzungstemperatur eines Kunststoffes handeln. Es ist bekannt, die niedrig schmelzenden oder bei niedrigeren Temperaturen vernetzenden Polymere, beispielsweise Polyester, Polyolefine oder Polyamid wie einen Mantel auszubilden. Die Bikomponentenfasern verbinden sich untereinander, so dass sich ein stabiles dreidimensionales Netz ausbildet. Es sind auch andere Mehrkomponentensysteme bekannt, beispielsweise Side-by-Side-Fasern und dgl. Gemäß einem weiteren Vorschlag der Erfindung wird der Mischung Monoaluphosphat beigefügt. Dieses eignet sich in 20 - 60%-iger Ausbildung, vorzugsweise 50%-ig. Gemäß der Erfindung können Fasern mit Materialen unterschiedlicher Schmelzpunkte von z.B. 110°C bis 230°C eingesetzt werden. Darüber hinaus können die Fasern unterschiedliche Dicken haben, etwa 1 bis 15 dtex oder ein 1 bis 15 g pro 10 km Faserlänge. Längen können zwischen 3 und 50mm verwendet werden.

Gemäß einem vorteilhaften Vorschlag der Erfindung werden dem Material mit hoher Wärmeleitfähigkeit zwischen 1 und 15% des Bikomponentenmaterials beigemischt. In der Erfindung werden als Material mit hoher Wärmeleitfähigkeit.

Blähgraphitfasern eingesetzt. Je nach Verwendung der Bikomponentenfasern werden Formtemperaturen zwischen 110°C und 200°C, vorzugsweise 150°C verwendet.

Die Formzeit liegt zwischen 1 Minute und 1 Stunde, vorzugsweise 10 Minuten. Dabei können erfindungsgemäß entsprechende Pressdrücke ausgeübt werden.

In vorteilhafter Weise können die Oberflächen des Formkörpers, beispielsweise der Platte, beschichtet sein. Als Beschichtungen können gemäß der Erfindung Materialien zur Verbesserung der mechanischen Festigkeit des Formkörpers auf wenigstens eine Oberfläche oder auf mehrere Oberflächen aufgebracht werden. Es kann sich dabei um Metallbleche, Kunststofffolien, Fasermatten, Papier, Magerbeton, Fliesen, Keramikfasermatten und dgl. handeln. Je nach verwendeter Beschichtung kann auch die Biegesteifigkeit des Formkörpers bzw. der Platte verbessert werden. Auch ist es möglich, auf eine oder mehrere Oberflächen Wärmedämmmaterial aufzubringen. Hierdurch kann in vorteilhafter Weise die Wärmeabstrahlung gesteuert werden. Neben den Hauptoberflächen können auch Kantenbereiche beschichtet werden.

Gemäß einem weiteren vorteilhaften Vorschlag der Erfindung werden vor der Fertigstellung des Formkörpers Bauelemente in das Material eingebettet. Dabei kann es sich um Beschläge oder auch Funktionselemente handeln. In vorteilhafter Weise kann ein Rohrregister oder können Rohre eingelegt werden, die später von einem Wärme- oder Kühlmedium durchflossen bzw. durchströmt werden. Auch können Anschlussstücke für Rohre oder Leitungen, elektrische Anschlüsse und dgl. eingebettet werden.

Gemäß einem weiteren Merkmal der Erfindung ist vorgesehen, dass die Bauelemente vor einem Einlegen in die Mischung auf wenigstens einer Oberfläche beschichtet werden. Demnach werden oberflächenbeschichtete Bauelemente in die Mischung eingebettet.

Die Ausbildung einer solchen Oberflächenbeschichtung hat den Vorteil, dass eine verbesserte thermische Verbindung zwischen den Bauelementen auf der einen Seite und der Mischung bzw. dem späteren Formkörper auf der anderen Seite erzielt werden kann. Eine solche Ausgestaltung ist insbesondere dann von Vorteil, wenn der spätere Formkörper als Heiz- und/oder Kühlkörper Verwendung finden soll. Als Bauelemente finden in einem solchen Fall insbesondere Rohre oder ein aus mehreren Rohrabschnitten gebildetes Rohrregister Verwendung. Eine auf derartige Rohre bzw. ein derartiges Rohrregister aufgebrachte Oberflächenbeschichtung sorgt dann für einen besseren Wärmeübergang zwischen den das Wärme- oder Kühlmedium führenden Rohren einerseits und dem Formkörper andererseits.

Die Oberflächenbeschichtung der Bauelemente kann zudem zu einer mechanisch stabileren Einbindung der Bauelemente in die Mischung bzw. den späteren Formkörper führen.

Mit der Erfindung wird insofern auch vorgeschlagen ein Wärme leitender Formkörper, insbesondere Formplatte, mit einem Grundkörper aus einem Material mit hoher Wärmeleitfähigkeit und einem Bauelement, das in den Grundkörper eingebettet ist, wobei auf die grundkörperseitige Oberfläche des Bauelements zumindest abschnittsweise eine Kontaktschicht aufgebracht ist.

Diese Kontaktschicht bzw. Oberflächenbeschichtung kann einen Klebstoff enthalten und mithin als Klebstoffbeschichtung ausgebildet sein. Es wird so einerseits ein inniger Verbund zwischen dem Bauelement und dem Formkörper sowie andererseits eine Wärme leitende Verbindungsschicht zwischen dem Bauelement und dem Formkörper andererseits geschaffen.

Gemäß einem weiteren Merkmal der Erfindung kann alternativ zur Klebstoffbeschichtung oder in Ergänzung hierzu eine Oberflächenbeschichtung mit einem Verbindungsmaterial vorgesehen sein, welches Verbindungsmaterial zumindest eine Materialkomponente aufweist, deren Schmelzpunkt unterhalb der größeren der unterschiedlichen Schmelztemperaturen des weiteren Materials der Mischung liegt. Bei einem Erwärmen der Mischung gemäß vorerläutertem Verfahrensschritt auf eine Temperatur, die größer als die niedrigere der unterschiedlichen Schmelztemperaturen ist, kommt es zu einem Aufschmelzen dieses Verbindungsmaterials, was zu einem innigen Verbund des in die Mischung eingebetteten Bauelements mit dem späteren Formkörper führt. Bevorzugterweise ist das eingesetzte Verbindungsmaterial das gleiche Material, wie das Material derjenigen der beiden Komponenten, welche die niedrigere Schmelztemperatur aufweist. Bei einem Erwärmen gemäß vorstehendem Verfahrensschritt kommt es somit zu einem Aufschmelzen sowohl der Oberflächenbeschichtung des Bauelements als auch der Materialkomponente der Mischung mit der niedrigeren Schmelztemperatur.

Gemäß einem weiteren Merkmal der Erfindung ist ferner vorgesehen, dass die Oberflächenbeschichtung der Bauelemente mit der Mischung und/oder dem Formkörper vorzugsweise durch Pressen verbunden wird. Ein solches Pressen kann beispielsweise während oder nach einer Erwärmung der Mischung gemäß vorstehendem Verfahrensschritt erfolgen.

Mit der Erfindung lassen sich mechanisch stabile Körper, insbesondere Platten, mit sehr hoher Wärmeleitfähigkeit herstellen. Da der Volumenanteil der Bikomponentenfasern klein ist, wird die gute Wärmeleitfähigkeit gegenüber herkömmlichen reinen Blähgraphitkörpern kaum beeinträchtigt. Durch die Möglichkeit des Einlegens von Rohren oder des Aufbringens von Beschichtungen vor der Vernetzung lassen sich auf sehr flexible Weise unterschiedlichste Platten und Körper fertigstellen, so dass die Herstellung des Zwischenproduktes wirtschaftlich optimiert ist.

Bei einem Herstellungsbeispiel wurden Blähgraphitfasern bei etwa 250°C gebläht. Anschließend wurde einem Kilogramm geblähtem Graphit ca. 50ml eines 50%-igen Monoaluphosphats und 10% Bikomponentenfaser beigemischt. Dieses Gemisch wurde in eine Plattenform gepresst. Der Pressling wurde bei geschlossener Form unter Pressdruck bei etwa 200°C für eine Stunde ausgehärtet. Die Formplatte ist druckfest und weist eine hervorragende Wärmeleitfähigkeit auf. Die Formplatte wurde anschließend mit einer Metalloberfläche versehen.

Weitere Vorteile und Merkmale der Erfindung ergeben sich aus der folgenden Beschreibung anhand der Figuren. Dabei zeigen:

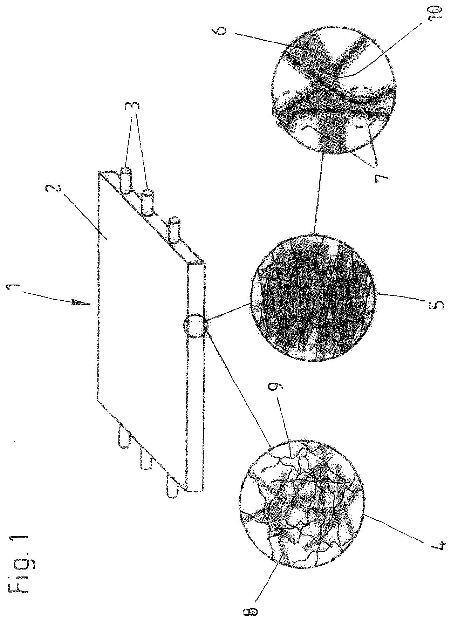

- Fig. 1: eine perspektivische Darstellung eines Formkörpers sowie Nebendarstellungen unterschiedlicher Zustandsformen des Gemenges.

Im gezeigten Ausführungsbeispiel ist der Formkörper 1 eine Platte 2, in welche Rohrleitungen 3 eingebettet sind.

Das Gemenge 4 besteht aus einer losen Mischung von Fasern, nämlich Graphitfasern 8 und Bikomponentenfasern 9. Die Ausrichtung der Fasern 8 und 9 ist rein zufällig.

Nach dem Pressen haben die einzelnen Fasern in dem Gemenge 5 eine Ausrichtung erfahren und sind verdichtet. Das Gemenge 5 wird dann auf die erforderliche Temperatur erwärmt.

Nach dem Erwärmen sind die Graphitfasern 6 durch die miteinander gegenseitig verklebten Bikomponentenfasern fest eingebunden. Die vor dem Verpressen bereits eingelegten Rohre 3 sind in den gesamten Plattenverbund fest eingebunden.

Der sich ergebende Formkörper lässt sich ohne weiteres handhaben und hat die notwendige mechanische Festigkeit für den Einsatz.

Das beschriebene Ausführungsbeispiel dient nur der Erläuterung und ist nicht beschränkend.

### Bezugszeichenliste

- 1: Formkörper
- 2: Platte
- 3: Rohre
- 4: ungepresstes Gemenge
- 5: verpresstes Gemenge
- 6: verschmolzenes Gemenge
- 7: Bikomponentenfasern
- 8: Graphitfäden
- 9: Bikomponentenfasern
- 10: Graphitfäden

## Patentansprüche

1. Verfahren zur Herstellung eines wärmeleitenden Formkörpers mit Wärmeleiteigenschaften mit folgenden Schritten:
a) Herstellen einer Mischung aus wenigstens zwei im schüttfähigen Zustand vorliegenden Bestandteilen in vorgegebenen Mengenverhältnissen, umfassend ein Material mit hoher Wärmeleitfähigkeit und ein weiteres Material aus wenigstens zwei Komponenten mit unterschiedlichem Schmelzpunkt;
b) Einbringen der Mischung in eine Form;
c) Einpressen der Mischung in die gewünschte Form;
d) Erwärmen der Mischung auf eine Temperatur, die größer ist als die niedrigere der unterschiedlichen Schmelztemperaturen; und
e) Abkühlen und Entformen des vernetzten Formkörpers,
wobei als Material mit hoher Wärmeleitfähigkeit Blähgraphitfasern verwendet werden, wobei als weiteres Material Bikomponentenfasern aus wenigstens zwei Komponenten verwendet werden.

2. Verfahren nach Anspruch 1, **dadurch gekennzeichnet, dass** die Blähgraphitfasern gebläht sind.

3. Verfahren nach Anspruch 1, **dadurch gekennzeichnet, dass** die Mischung Monoaluphosphat, vorzugsweise 50%-iges Monoaluphosphat umfasst.

4. Verfahren nach einem der vorhergehenden Ansprüche, **dadurch gekennzeichnet, dass** das Material mit hoher Wärmeleitfähigkeit den Grundbestandteil darstellt, dem 1 bis 15 % des Materials aus wenigstens zwei Komponenten beigemischt werden.

5. Verfahren nach einem der vorhergehenden Ansprüche, **dadurch gekennzeichnet, dass** die Mischung auf eine Temperatur zwischen 150°C und 200°C, vorzugsweise auf 150°C erwärmt wird.

6. Verfahren nach einem der vorhergehenden Ansprüche, **dadurch gekennzeichnet, dass** die Mischung für 1 Minute bis 1 Stunde, vorzugsweise 10 Minuten in der Form verbleibt.

7. Verfahren nach einem der vorhergehenden Ansprüche, **dadurch gekennzeichnet, dass** der Formkörper auf wenigstens einer Oberfläche beschichtet wird.

8. Verfahren nach Anspruch 7, **dadurch gekennzeichnet, dass** das Beschichtungsmaterial in die Form eingebracht wird.

9. Verfahren nach einem der vorhergehenden Ansprüche, **dadurch gekennzeichnet, dass** in die Mischung vor dem Vernetzen Bauelemente, vorzugsweise Rohre eingelagert werden.

10. Verfahren nach Anspruch 9, **dadurch gekennzeichnet, dass** die Bauelemente vor einem Einlagern in die Mischung auf wenigstens einer Oberfläche beschichtet werden.

11. Verfahren nach Anspruch 10, **dadurch gekennzeichnet, dass** die Oberflächenbeschichtung der Bauelemente mit der Mischung und/oder dem Formkörper vorzugsweise durch Pressen verbunden wird.

12. Verfahren nach Anspruch 10 oder 11, **dadurch gekennzeichnet, dass** die Oberflächenbeschichtung der Bauelemente zumindest eine Materialkomponente aufweist, deren Schmelzpunkt unterhalb der größeren der unterschiedlichen Schmelztemperaturen des weiteren Materials der Mischung liegt.

13. Formkörper hergestellt nach dem Verfahren nach wenigstens einem der Ansprüche 1 bis 12.

## Claims

1. A method for manufacturing a heat conducting moulded body comprising thermal conduction properties, comprising the following steps:
a) production of a mixture of predefined proportions of at least two components being in the pourable state, comprising a material having a high thermal conductivity and another material composed of at least two components having a different melting point;
b) introduction of the mixture into a mould;
c) pressing the mixture into the desired shape;
d) heating up the mixture to a temperature which is higher than the lower one of the different melting temperatures; and
e) cooling down and removing the cross-linked moulded body,
wherein flatulent graphite fibres are used as material comprising a high thermal conductivity, wherein bi-component fibres composed of at least two components are used as other material.

2. A method according to claim 1, **characterized in that** the flatulent graphite fibres are billowed.

3. A method according to claim 1, **characterized in that** the mixture comprises monoaluphosphate, preferably a 50 %-monoaluphosphate.

4. A method according to one of the preceding claims, **characterized in that** the material comprising a high thermal conductivity represents the main component, to which 1 through 15 % of the material composed of at least two components are added.

5. A method according to one of the preceding claims, **characterized in that** the mixture is heated up to a temperature comprised between 150°C and 200°C, preferably to 150°C.

6. A method according to one of the preceding claims, **characterized in that** the mixture will remain in the mould for a period of time comprised between one minute and one hour, preferably for 10 minutes.

7. A method according to one of the preceding claims, **characterized in that** the moulded body will be coated on at least one surface.

8. A method according to claim 7, **characterized in that** the coating material will be introduced into the mould.

9. A method according to one of the preceding claims, **characterized in that** construction elements, preferably tubes will be embedded in the mixture before cross-linking.

10. A method according to claim 9, **characterized in that** the construction elements will be coated on at least one surface before being embedded in the mixture.

11. A method according to claim 10, **characterized in that** the surface coating of the construction elements will be connected with the mixture and/or the moulded body, preferably by means of pressing.

12. A method according to claim 10 or 11, **characterized in that** the surface coating of the construction elements at least comprises one material component, the melting point of which is beneath the higher one of the different melting temperatures of the other material of the mixture.

13. A moulded body manufactured according to the method according to at least one of the claims 1 through 12.

## Revendications

1. Procédé de fabrication d'un corps moulé conducteur de chaleur ayant des propriétés de conductivité thermique, comprenant les étapes suivantes de :
a) fabriquer un mélange à partir des proportions prédéfinies d'au moins deux composants étant dans l'état d'être déversés, comprenant un autre matériau composé d'au moins deux composants, qui ont un point de fusion différent ;
b) introduire le mélange dans une moule ;
c) presser le mélange dans la forme désirée ;
d) chauffer le mélange à une température supérieure à la température inférieure des deux températures de fusion ; et
e) faire refroidir et enlever le corps moulé réticulé,
dans lequel on utilise des fibres de graphite expansé comme un matériau ayant une conductivité thermique élevée, et dans lequel on utilise des fibres bicomposées comprenant au moins deux composants comme l'autre matériau.

2. Procédé selon la revendication 1, **caractérisé en ce que** les fibres de graphite expansé sont gonflées.

3. Procédé selon la revendication 1, **caractérisé en ce que** le mélange comprend du mono-phosphate d'aluminium, de préférence du mono-phosphate d'aluminium de 50%.

4. Procédé selon l'une des revendications précédentes, **caractérisé en ce que** le matériau ayant une conductivité thermique élevée représente la composante principale, à laquelle sont ajoutés 1 à 15 % du matériau comprenant au moins deux composants.

5. Procédé selon l'une des revendications précédentes, **caractérisé en ce qu'**on chauffe le mélange à une température comprise entre 150° et 200°C, de préférence à 150°C.

6. Procédé selon l'une des revendications précédentes, **caractérisé en ce que** le mélange reste dans la moule pour une période comprise entre une minute et une heure, de préférence pour dix minutes.

7. Procédé selon l'une des revendications précédentes, **caractérisé en ce que** le corps moulé est revêtu sur au moins une surface.

8. Procédé selon la revendication 7, **caractérisé en ce que** le matériau de revêtement est introduit dans la moule.

9. Procédé selon l'une des revendications précédentes, **caractérisé en ce que** des éléments de construction, de préférence des tuyaux, sont incorporés dans la mélange avant la réticulation.

10. Procédé selon la revendication 9, **caractérisé en ce que** les éléments de construction sont revêtus sur au moins une surface avant de les incorporer dans le mélange.

11. Procédé selon la revendication 10, **caractérisé en ce que** le revêtement de surface des éléments de construction est relié au mélange et/ou au corps moulé, de préférence par pressage.

12. Procédé selon la revendication 10 ou la revendication 11, **caractérisé en ce que** le revêtement de surface des éléments de construction comprend au moins un composant de matériau, dont le point de fusion reste inférieur à la température plus élevée des températures de fusion différentes du deuxième matériau du mélange.

13. Corps moulé fabriqué selon le procédé selon au moins l'une des revendications 1 à 12.
